# EUROPEAN PATENT APPLICATION

(11) **EP 0 807 902 A2**
(43) Date of publication of application: **19.11.1997**
(21) Application number: 97300386.6
(22) Date of filing: 21.01.1997
(51) Int. Cl.: G06T 15/70

(54) **Method and apparatus for generating moving characters**

(30) Priority: 16.05.1996 GB 9610212
(71) Applicant: Cyberclass Limited, Kingston-upon-Thames, Surrey KT2 6NH (GB)
(72) Inventor: Parkin, Godfrey Maybin, Reigate RH2 8RD (GB); Goodman, Carl William, Hersham, Surrey KT12 5HH (GB)
(74) Representative: Keltie, David Arthur

(57) **Abstract**

An avatar is generated by
i) providing:
   a) a three-dimensional representation (2) of the structure of the character, the structure representation changing in real time to represent movement of the character,
   b) a three-dimensional representation of the surface (1) of the character which is mapped onto said structure representation, and
   c) a two-dimensional representation of frequently changing portions of said surface, eg the portions used to generate facial expressions and
ii) combining said representations a), b) and c) to generate a combined representation of the moving character. Because the frequently changing portions are represented only two-dimensionally, less processing power and ROM is needed to display the avatar.

## Description

The present invention relates to a method and apparatus for generating moving characters. More particularly the invention relates, in preferred embodiments, to a method and apparatus (particularly a programmed personal computer) for creating real-time-rendered virtual actors (avatars).

Techniques exist for creating photo-realistic avatars in eg arcade games and for cinema production but these normally rely either 1) on 3D laser scanning which is very expensive and produces models that are very demanding of processing power and memory and cannot be run on conventional personal computers (PC's), even those based on the Pentium chip, or 2) on Full Motion Video (FMV), which places filmed sequences in computer-playable formats. Such techniques have the following major disadvantages:
a) the appearance of the characters in FMV is flat and non-immersive
b) the colours in FMV are washed out
c) the development cost of both FMV and laser scanning is high
d) the game play is tedious and linear, restricted to pre-filmed or pre-rendered scenes
e) the ROM demands of both are excessive.

Alternatively, developers intercut occasional pre-rendered scenes using non-photorealistic dummies, but
a) being non-interactive, they inevitably interrupt gameplay
b) they invariably lack realism
c) very long development times are required.

Furthermore this expedient does not avoid the inflexibility and excessive ROM demands of FMV.

Currently no games developers use real-time photo-realistic 3D avatars in games for the PC platform. It is thought that the reason for this is that current 3D scanning technology is inappropriate for this application. In particular, existing whole body scanners produce models of sizes well in excess of 100,000 polygons, which cannot therefore be rendered in real time on a PC. A reduction by a factor of 100 in the number of polygons is required for such real-time rendering and the polygon reduction tools which can be used for this purpose do not give acceptable results.

An object of the present invention is to ovecomeor alleviate some or all of the above disadvantages.

Accordingly in one aspect the invention provides a method of generating a moving character for a display, comprising the steps of i) providing:
a) a three-dimensional representation of the structure of the character, the structure representation changing in real time to represent movement of the character,
b) a three-dimensional representation of the surface of the character which is mapped onto said structure representation, and
c) a two-dimensional representation of frequently changing portions of said surface,
and
ii) combining said representations a), b) and c) to generate a combined representation of the moving character.

In another aspect the invention provides an apparatus for generating a moving character comprising:
i) memory means arranged to provide:
   a) a three-dimensional representation of the structure of the character, the structure representation changing in real time to represent movement of the character,
   b) a three-dimensional representation of the surface of the character which is mapped onto said structure representation, and
   c) a two-dimensional representation of frequently changing portions of said surface,
   and
ii) processing means arranged to combine said representations a), b) and c) to generate a combined representation of the moving character.

Preferred embodiments are defined in the dependent claims.

In its preferred embodiments the present invention enables the creation of fully three-dimensional characters that are capable of moving and behaving in a convincingly human fashion, interacting with their environment on a data-driven level, supporting a variety of traditional photographic and cinematic techniques, such as moving from long-shots to close-ups without break or transition, and which provide lip-synchronisation and sufficient facial expression to enable a wide range of conversation and mood, all within the existing constraints of real-time rendering on PC's.

In preferred embodiments in which the rapidly changing area of the character conveys speech and facial expression, emulation of a range of phonemes and a range of eye and forehead movements is provided for. It has been found that by subdividing the face into upper and lower areas and substituting texture maps accordingly, an acceptably wide range of expressions and mouth movements can be conveyed in an economical fashion.

In such embodiments the two-dimensional representations c) are for example of eye, mouth and preferably also forehead regions of the face. These are preferably photographic in origin. Consequently even slight, simple movements in the head convey a feeling of realism, as the viewer reads their own visual experience into the character in a way that cannot be done with any other illustrative technique.

Because the rapidly changing areas of the character are represented two-dimensionally (and therefore do not involve recalculation of position as the character changes orientation, as would be required in the case of a wire frame model in which changes in expression are generated by movements of polygons beneath the surface), less processing power, memory and bandwidth (if the image is transmitted eg over the Internet) is required.

In one embodiment the production path for the avatars is as follows:

Photograph (in 35mm format) subjects head from front and side viewpoints, for geometry creation, placing a physical right-angled calibration target (a pre-marked set square) horizontally within the photographed image

Photograph subject head-on running through a fixed list of phonemes and facial expressions.

Photograph subject's body from two viewpoints for geometry creation

Using 3d plotting software (eg Wireframe Xpress, previously used for CAD purposes), plot each individual vertex and polygon by hand to describe the surface structure of the heads.

Image re-touch all of the photographic texture-maps so that they synchronise in colour and lighting (eg using Aldus PhotoShop and various other graphics packages).

Sub-divide geometry and apply texture-maps to appropriate areas.

Create back and front segments for all limb sections, and retouch texture-maps

Define inverse kinematics hierarchy and animate using captured motion ( eg using a combination of Flock of Birds, Puppeteer, and 3D Studio)

Feed into a suitable 3D engine (eg MUMM-E) which runs under, for instance, Argonaut's BRender real-time 3D engine.

The result is believably human pseudo-video rendered on the fly at frame rates of 12 - 16 frames a second on an ordinary pentium PC.

A preferred embodiment of the invention will now be described by way of example only with reference to Figures 1 to 3 of the accompanying drawings, wherein:
Figure 1 shows the generation of a structure representation mapped onto a surface representation of a human character shown A) in front view and B) in profile;
Figure 2 shows the above character in front view with the frequently changing portions ( forehead, eyes and mouth) used for facial expression shown in different states, and
Figure 3 is a diagrammatic representation of the apparatus used for the capture of motion of the body of the above character.

The detailed production procedure for heads and faces is as follows:

### Stage 1: Photography

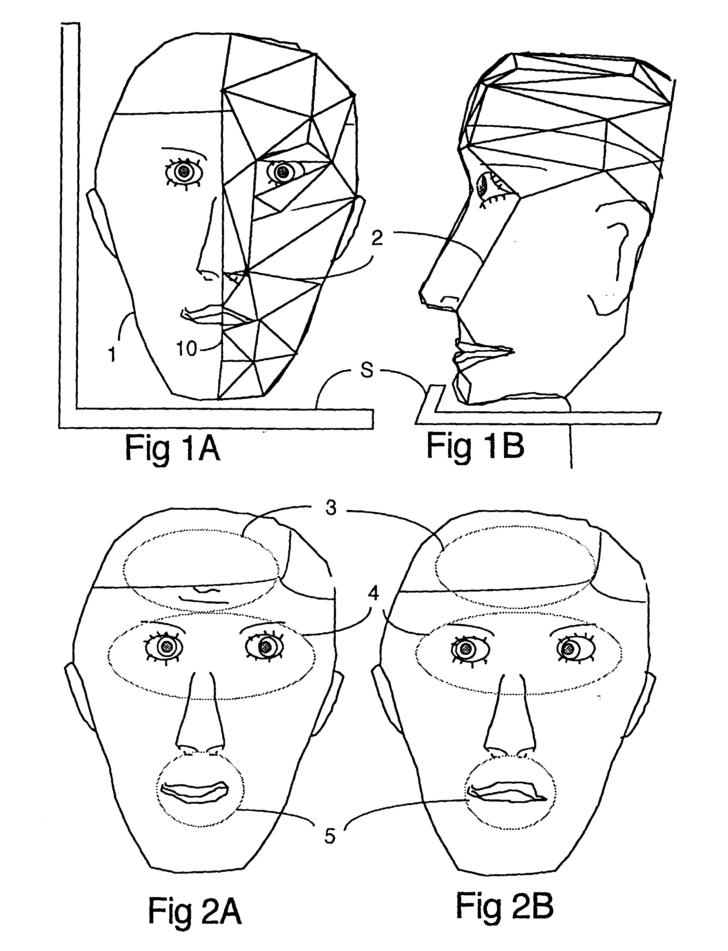

I: Format: the camera negative format should be 35mm, so that the application can consistently calculate the camera position.
II: Lens: the focal length of the lens should be ideally around 100m; this allows for perspective flattening effects to be made use of.
III: Lighting: Lighting should be diffuse and evenly balanced across both sides of the face. most pleasing results have been obtained with warmer images. Photographing subjects under tungsten lighting using 100-400 ASA daylight balanced film has proven effective.
IV: Triangulation and calibration: The subject is photographed with a calibration target S as shown in Figure 1A and Figure 1B. The calibration target works well when it runs under the subject's chin, with about 200mm (8 inches) vertical separation. In order for the face to be mirrored correctly the front of the target must be parallel to the face. The Z axis of the target should move back over the subjects left shoulder.
   The resulting photographs 1 are subsequently used to generate a three-dimensional representation of the surface of the subject onto which is mapped a polygonal model 2 of the underlying structure of the subject which in use is manipulated in three dimensions by the computer running the finished video game. This process will be explained in detail subsequently .
V: Angles: best results are obtained with photographs taken at right angles, with profile (0 degrees) and full-face (90 degrees). The profile shot should cover the entire head.
VI: Mouth movements: the following movements and expressions should be included:
   1: Eyes looking left
   2: Eyes looking right
   3: Sceptical look
   4: Laugh
   5: Wide eyes
   6: Raised eyebrows
   7: Mad/cross
   8: Sad look
   9: Half blink (sleepy)
   10: Full blink
   11: "Em" - Phonetic M sound -
   12: "eff" - Phonetic F sound -
   13: "Oh" - Phonetic O sound -
   14: "Yew" - Phonetic U sound -
   15: "En" - Phonetic N sound -
   16: "Arh" - Phonetic R sound -
   17: "Ae" - Phonetic A sound -

With these movements care must be taken to ensure no extreme deformations of the jaw-line occur. Keeping the jaw lightly clenched whilst photographing the mouth movements reduces the risk of this.

Typical expressions are illustrated in Figures 2A and 2B. The forehead, eyes and mouth regions 3, 4 and 5 are recorded two-dimensionally and their different states are stored for use by the finished game program. Such use can involve appropriate combinations of states (eg frown, eyes left, lips compressed) according to the game play eg in response to commands from the user of the game.

### Stage 2: Face digitisation

I: Work with the profile (0 degree) photo in the left hand window, and the full-face (90 degree) in the right.
II: Digitise the calibration target S first of all. A discrepancy can occur when minor mismatches between calibration data in the target settings window and pixel locations of the points in the images take place. The symptom is usually a misalignment between the calibration grid and one point of the triangle; often the triangle lies out of the calibration plane by around 15 to 25 degrees. The remedy is to selectively lengthen or shorten one of the dimensions in the target settings window, in quarter to half inch increments, until the triangle lies in the plane of the grid.
III: The plotting of the 3d polygonal structure representation 2 on the photographic representation 1 of the surface is illustrated in Figures 1A and 1B. On the face, the first line to plot is that of the profile. This should extend from the curve of the throat, up through the curve of the chin, over the mouth, up under the nose, through to the bridge of the nose, and up the forehead to the hairline. This line 10 (Figures 1A and 1B) should be made up of 10-12 points, and be an open path.
IV: This first profile line can then be taken into Excel to be straightened in the x-axis. The process for working with .3DP files in Excel is described later.
V: Next, the hairline should be followed down to the base of the left ear, and along the jaw. Again, 10-12 points are likely to be needed to keep this line smooth. This line should join the profile at the bottom of the chin.
VI: The first complex component is the eye. Plot this as a flat plane, with a point in the centre - on the iris. This can be moved back and forth in the profile view to adjust for curvature. Plot open paths along the eyebrow, and down the eyelid. Connect these with faces.
VII: The second complex component is the nose, particularly the underside. Make frequent use of the perspective view tool to ensure that the line of the profile is not distorted. This is easy to do, and results in caricature-like geometry is in the final model. Be especially careful that the points under the nose in the two images relate.
VIII: Build the forehead with a horizontal ribbon running across to the temple, just above the eyebrow. Use as few faces as possible, but ensure that the turn of the angle of the forehead is neither to swept or to sharp.
IX: Follow the pit of the eye, from eyebrow to nose. use this line as a basis for the rest of the front of the face.
X: Extend a ribbon across the mouth, probably no more than two or three points. Use this to create a plane from nose to chin; do not over-model the mouth, as the animated texture maps will not fit the geometry if you do.
XII: Join the rest of the face with triangles. When finished, you will have a completed left hand side to the face.
XIII: The next component is the side and back of head. The entire side and back can be extracted from the profile shot if careful. The first step is to start a new project, and then reverse the position of the photographs, so that the full-face is in the left window, and the profile is in the right.
XIV: Begin by plotting from the centre of the hairline around to the base of the jaw, as close as possible to the ending point of the faces jawline. Finish this line with a point buried within the centre of the head.
XV: Plot the outline of the ear. Use one, or if necessary two, points inside the ear to form faces in the same way as has been done with the eye.
XVI: Build transverse ribbons through the hair, from the centre to the left edge of the head.
XVII: For the back of the head, Drop lines vertically down from the transverse crown-line towards the nape of the neck or the base of the hair. In order to establish which point is which when closing faces, use the select point tool (by clicking on a verter).
XVIII: The final component is the neck and shoulders. The point at which you stop building out from the head will be a decision made in accordance with the structure for the rest of the model. It may be appropriate to limit this to the collar line, or extend the neck further into the throat and clavicle area.
XIX: Start a new project, with the profile in the left window now, and the fullface in the right hand window.
XX: The neck is essentially a cylinder, with sufficient modelling to fit into the base of the head and extend into the head. Three lines of 6 points running around the neck should suffice. Once completed, close faces as before.

### Stage 3: Mirroring

I: It is now necessary to mirror the face, head/hair, and neck. The face needs more attention than the other two components, in that we need to move the texture map as well as mirror the geometry.
II: Mirroring involves a dos-command line utility called, unsurprisingly, mirror. The syntax for this is very simply: mirror filename.3dp newfilename.3dp. Perform this function on each component.
III: The mirroring process is not entirely stable. It is now necessary to take the new .3dp files into Excel or another spreadsheet (Excel is known to work) and recalculate certain vertex locations. The problem with mirror is that it will reflect geometry around the project centre point, not along the weld line of the model. In addition, mirror does not move the pixel location of the vertex co-ordinates in the texture map. This results in the texture map being mirrored as well as the geometry, rather than it picking up new co-ordinates from the new geometry is pixel location. The effect is somewhat counter-intuitive!
IV: .3dp files are ASCII based text files, with a structure that can be defined as a space-delimited variable. Excel will import this structure, with some effort.
V: Open the file in Excel. Specify the file type as a text file (with the extensions .txt, .csv and .prn). Add *.3dp to the file extensions list, and select the face file.
VI: Excel will launch one of its "wizard" utilities; on the first page of this, select edelimitedi as being the file type. On the second, turn off "tab" and turn on "space". On the third, select "text" as being the data type.
VII: The file will open. Select all of columns A to J and change the column width to 20. Click on the "centre" icon. Often, an error message will occur saying "selection too large, continue without undo?" Answer yes. This file may now be worked on.
VIII: Approximately one third of the way down the file is the points database, with XYZ coordinates for the vertices. The first three point values will relate to the calibration target - ignore them. points 4 to n will be the values for original half of the face; look at the left hand column, which represents the x values. Note two things: first that the first half of the column has negative values, second that the first 10-12 points havethe same value. These are the first set of points defined for the profile. Make note of this value. Move down the column until the points turn from negative to positive. Thes are the values for the mirored half-face x coordinates. These values must be changed.
IX: The formula for moving these is =SUM(value)-(2*****.x), where x is the value from your profile line. Change all the values for the second half of the column using this.
X: At the top of the file is the points database. This gives the values for the equivalent location in x-y pixel co-ordinates for the vertices in left and right pictures. There are four columns (apart from the numbering of the points) They read x-left hand y-left hand x-right hand y right hand. The column to be concerned with is the x-right hand. Again, locate the mirror portion by noting the discrepancies in values, and identify the number given to the weld line. The same process as with the points database needs to be performed, but in this case the formula is SUM(y-value+y), where y is the vlue in pixels from the welding line.
XI: Do the above for both the neck and hair/head, but do not mirror the pixel database - symmetrical hairstyles are easier corrected in 3d Studio.
XII: The next step is to convert the .3dp files to 3d Studio files and assign texture vertices. Again a command line tool, called convert, is used. The syntax is convert filename.3dp -r name of right-hand photograph.bmp matx.tga .
XII: It may well be necessary to work on the texturemap files; the hair may need to be cloned outwards, the same for the neck in the neck texture, and also clean hair off the forehead by cloning.
XIII: Take files into 3ds, join and move vertices where necessary.

### Stage 4: Lip Synching

I: Using the basic fullface image, move to Animator Pro. Load all of the subsequent facial movements as a flic file.
II: Cut out the active area of the face, i.e. around the eyes and down to the mouth, taking care to include areas of skin that might also move.
III: Add these cut-outs in the correct positions down onto the basic face of the subject, using the original fullface shot
IV: Cut out the areas of the photograph (3, 4 or 5 - Figures 2A and 2B) that will move from frame to frame. For example cut out one of the moving eyes and paste it down onto the original area of the image. Also select some of the surrounding skin and using the C (clip) and L (lasso) tools. Pick up parts of the skin using the C (clip) and M (move) tools. Use the "`" apostrophe mark to paste these into the final flic.
V: The flic file should then contain all of the images from the original photoshoot of seventeen expressions, and if necessary any in-between frames that are required to smooth the facial movement. From this flic file, a render in 3d Studio can ensure that none of the fluid facial movements exceed the limits of the static facial geometry. For final export into Brender or Rendermorphics, individual frames can be generated.
VI: Apply the final animated file (saved in .cel format) to the facial geometry in 3ds. Construct a hierarchy that links the face and the head/hair, and place its pivot point at the nape of the neck. This allows for convincing head movement, combined with photographically realistic facial expressions. Adjust imperfections accordingly.

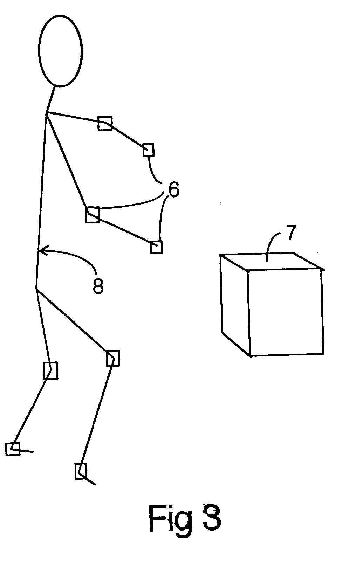

The body of the character can be animated and combined with the head by standard techniques. One way of capturing motion of the body is illustrated in Figure 3 wherein magnets are mounted at the joints of the subject's body 8 and their position detected by an electromagnetic positon sensor 8 of standard type.

The avatar derived from such a technique can be controlled and displayed by a computer game.

The invention extends to any novel combination or sub-combination disclosed herein. In particular any photographic representation of the rapidly changing areas of the character, whether or not two-dimensional, may be employed.

## Claims

1. A method of generating a moving character for a display, comprising the steps of
i) providing:
a) a three-dimensional representation of the structure of the character, the structure representation changing in real time to represent movement of the character,
b) a three-dimensional representation of the surface of the character which is mapped onto said structure representation, and
c) a two-dimensional representation of frequently changing portions of said surface,
and
ii) combining said representations a), b) and c) to generate a combined representation of the moving character.

2. A method as claimed in claim 1 wherein said combined representation is generated in real time.

3. A method as claimed in claim 1 or claim 2 wherein said combined representation is displayed interactively in response to commands from a user.

4. A method as claimed in any preceding claim wherein two or more such two-dimensional representations c) of different frequently-changing changing portions of said surface are generated and are combined with said representations a) and b).

5. A method as claimed in any preceding claim wherein the two-dimensional representation(s) c) is/are of portion(s) of facial expressions.

6. A method as claimed in any preceding claim wherein said three-dimensional surface representation b) is derived from a photograph.

7. A method as claimed in any preceding claim wherein said three-dimensional structure representation a) comprises a multiplicity of polygons.

8. A method as claimed in any preceding claim wherein said combining step ii) is carried out by a program running in a PC and the character is displayed in real time on the display of the PC.

9. An apparatus for generating a moving character comprising:
i) memory means arranged to provide:
a) a three-dimensional representation of the structure of the character, the structure representation changing in real time to represent movement of the character,
b) a three-dimensional representation of the surface of the character which is mapped onto said structure representation, and
c) a two-dimensional representation of frequently changing portions of said surface,
and
ii) processing means arranged to combine said representations a), b) and c) to generate a combined representation of the moving character.

10. An apparatus as claimed in claim 9 wherein said processing means is arranged to generate said combined representation in real time.

11. An apparatus as claimed in claim 9 or claim 10 wherein said processing means is providedwith user-controlled input means and is arranged to display said combined representation interactively in response to commands from a user.

12. An apparatus as claimed in any of claims 9 to 11 which is arranged to combine two or more such two-dimensional representations c) of different frequently-changing changing portions of said surface with said representations a) and b).

13. An apparatus as claimed in any of claims 9 to 12 wherein the two-dimensional representation(s) c) is/are of portion(s) of facial expressions.

14. An apparatus as claimed in any of claims 9 to 13 wherein said three-dimensional surface representation b) is derived from a photograph.

15. An apparatus as claimed in any preceding claim wherein said three-dimensional structure representation a) comprises coordinates defining a multiplicity of polygons.

16. An apparatus as claimed in any of claims 9 to 15 which is a PC arranged to display the character in real time on its display.

17. An avatar comprising:
a) an animated three-dimensional structure representation ,
b) a three-dimensional surface representation which is mapped onto said structure representation, and
c) a two-dimensional representation of frequently changing portions of the surface of the avatar.

18. A method of generating a moving character substantially as described hereinbabove with reference to Figures 1 to 3 of the accompanying drawings.
